# EUROPÄISCHE PATENTSCHRIFT

(11) **EP 4 049 902 B1**
(45) Veröffentlichungstag und Bekanntmachung des Hinweises auf die Patenterteilung: **23.04.2025**
(21) Anmeldenummer: 21159661.4
(22) Anmeldetag: 26.02.2021
(51) Int. Cl.: B60R 19/04, B60R 19/18, B60R 19/34

(54) **STOSSFÄNGERANORDNUNG FÜR EIN KRAFTFAHRZEUG**
BUMPER ARRANGEMENT FOR A MOTOR VEHICLE
AGENCEMENT DE PARE-CHOC POUR VÉHICULE AUTOMOBILE

(43) Veröffentlichungstag der Anmeldung: 31.08.2022
(73) Patentinhaber: Benteler Automobiltechnik GmbH, 33102 Paderborn (DE)
(72) Erfinder: Paare, Mirko, 33106 Paderborn (DE); Mollemeier, Elmar, 33129 Delbrück (DE)
(74) Vertreter: Ksoll, Peter

(56) Entgegenhaltungen:
- WO-A1-2019/025163
- DE-A1- 10 223 674
- DE-A1- 102009 004 827
- DE-A1- 102017 222 081
- DE-U1- 202020 005 403

## Beschreibung

Die Erfindung betrifft eine Stoßfängeranordnung für ein Kraftfahrzeug gemäß den Merkmalen im Oberbegriff von Anspruch 1.

Stoßfängeranordnungen werden bei Kraftfahrzeugen standardmäßig sowohl front- als auch heckseitig eingebaut, um die Stoßenergie von Anprallvorgängen abzufangen, so dass die Tragstruktur des Kraftfahrzeugs möglichst nicht beschädigt wird. Stoßfängeranordnungen üblicher Bauart weisen einen Querträger auf, der unter Eingliederung von Crashboxen quer zu den Längsträgern eines Kraftfahrzeugrahmens festlegbar ist. Der Querträger dient dazu, die aus einem Anprall resultierende Energie in die Crashboxen einzuleiten, wo die Stoßenergie in Verformungsarbeit umgewandelt werden soll. Das System wird dabei so aufeinander abgestimmt, dass die Crashboxen jeweils möglichst mittig auf den Längsträgern sitzen und die Stoßenergie über die Querträger mit einem möglichst geringen Biegemoment in die Crashboxen und damit auf die Längsträger eingeleitet wird. Bei den meisten Frontkollisionen erfolgt der Aufprall jedoch versetzt und nur in einem bestimmten Bereich der Fahrzeugfront, also nicht über die gesamte Breite.

Die EP 3 668 758 B1 offenbart einen Stoßfängerquerträger für ein Fahrzeug, der aus einen äußeren Schale und einer an die äußere Schale angeschlossenen inneren Schale zusammengesetzt ist.

Aus der DE 10 2019 120 327 A1 geht ein Stoßfängerquerträger für ein Kraftfahrzeug hervor, der aus zwei Schalen zusammengesetzt ist und der in seiner Mitte einen Durchzug aufweist, durch den der Querträger in einen oberen Hohlkammerabschnitt und einen unteren Hohlkammerabschnitt unterteilt ist. Der Querträger ist über Crashboxen fahrzeugseitig abgestützt. Der Stoßfängerquerträger weist einen zweiten unterhalb des unteren Hohlkammerabschnitts angeordneten Querträger auf, an den ebenfalls Crashboxen angeschlossen sind.

Ferner sind aus DE 10 2017 222 081 A1 und DE 20 2020 005 403 U1 Stoßfängeranordnungen bekannt.

Kraftfahrzeug-Stoßfänger bzw. Stoßfängeranordnungen müssen die gesetzlichen Regelungen ebenso wie die von Verbraucherschutzorganisationen gestellten Anforderungen an einen Fußgängerschutz erfüllen. Darüber hinaus müssen die Anforderungen aus den verschiedenen Einstufungstests der Versicherer (RCAR, GDV) erfüllt werden. Gleichzeitig stellen die Automobilbauer die fahrzeugspezifischen Forderungen an eine optimale Bauraumnutzung, ein hohes Energieabsorptionsvermögen bei möglichst geringem Gewicht sowie akzeptablen Kosten und guter Montierbarkeit. Die Umsetzung der teilweise schwierig zu vereinbarenden Forderungen stellt eine entsprechend hohe Herausforderung dar.

Der Erfindung liegt ausgehend vom Stand der Technik die Aufgabe zugrunde, eine funktional verbesserte Kraftfahrzeug-Stoßfängeranordnung zu schaffen, die in kosten- und gewichtssparender Bauweise ein vorteilhaftes Belastungsverhalten und ein hohes Energieaufnahmevermögen gewährleistet bei einem modularisierten Aufbau.

Die Lösung dieser Aufgabe besteht in einer Stoßfängeranordnung gemäß Anspruch 1.

Vorteilhafte Ausgestaltungen und Weiterbildungen des erfindungsgemäßen Stoßfängers sind Gegenstand der abhängigen Ansprüche.

Begriffe wie quer und längs, oben und unten, horizontal und vertikal oder Längsrichtung und Querrichtung sowie Oberseite und Unterseite, Fahrzeugseite, fahrzeugseitig beziehen sich auf die Einbaulage der Stoßfängeranordnung im Kraftfahrzeug.

Die Kraftfahrzeug-Stoßfängeranordnung weist einen Querträger und jeweils endseitig des Querträgers angeordnete Crashboxen sowie äußere Endmodule auf. Erfindungsgemäß umfasst jedes Endmodul einen Schalenkörper. Der Schalenkörper ist jeweils mit einer Crashbox gefügt, wohingegen der Querträger jeweils mit einem Ende mit dem Schalenkörper gefügt ist.

Vorzugsweise ist ein den Schalenkörper frontseitig zumindest bereichsweise abdeckendes Schild vorgesehen. Das Schild bildet zusammen mit dem Schalenkörper ein Endmodul. Das vorteilhafte Verformungsverhalten eines Endmoduls wird durch die jeweils angebundene Crashbox unterstützt.

Die Stoßfängeranordnung weist einen aus Komponenten bzw. Modulen zusammengesetzten Aufbau auf. Die einzelnen Komponenten sind kostengünstig in der Herstellung bei gewichtssparender Bauweise. Der Aufbau insgesamt ist plattformfähig. Die Stoßfängeranordnung kann auf unterschiedliche Fahrzeuge einer Baureihe angepasst werden. Dies erfolgt durch Anpassung von Bauteilen bzw. Bauteilkomponenten der Stoßfängeranordnung und deren fahrzeugspezifischen Skalierung.

Die Aufprallkräfte werden wirksam zu Teilen des Kraftfahrzeugs geleitet, an denen die Energie wirkungsvoll und sicher absorbiert werden kann. Die Knautschzone der Fahrzeugfront kollabiert in einer kontrollierten Weise, während die Fahrgastzelle möglichst unverformt bleibt. Fahrzeuginsassen werden keiner bzw. einer deutlich reduzierten gefährlichen Geschwindigkeitsabnahme ausgesetzt. Auch die Rückwärtsbewegung von Lenkrad und Pedalen wird begrenzt, wodurch insbesondere schwere Verletzungen vermieden werden können.

Die erfindungsgemäße Stoßfängeranordnung weist ein hohes Energieaufnahmevermögen auf bei einem fahrzeugspezifisch den Anforderungen entsprechend ausgelegtem Deformationsverhalten. Die geometrische Ausgestaltung der sich modular ergänzenden Bauteile von Querträger, Crashboxen und der erfindungsgemäß ausgelegten Endmodule führen zu einer funktional verbesserten Kraftfahrzeug-Stoßfängeranordnung. Die Stoßfängeranordnung weist ein vorteilhaftes Verformungsverhalten, insbesondere bei einem Anprall auf ein stehendes Hindernis wie einem Baum oder einem Pfahl auf ebenso wie bei einem versetzten Aufprall und insbesondere einem Zusammenprall mit einem seitlich mobilen Hindernis. Die erfindungsgemäße Kraftfahrzeug-Stoßfängeranordnung lässt eine Gewichtsersparnis gegenüber bekannten Systemen zu, und zwar bei vergleichbar guter oder besserer Crashperformance.

Das Schild deckt den Schalenkörper frontseitig vorzugsweise vollständig ab. Der Schalenkörper kann äußere Wandabschnitte aufweisen, insbesondere untere oder seitliche Wandabschnitte, die sich über die Kontur des Schilds hinaus erstrecken. Die Wandabschnitte verlaufen parallel zum Schild, sind aber durch das Schild bereichsweise nicht abgedeckt. Im Schild können Öffnungen bzw. Durchbrüche und/oder Durchzüge vorgesehen sein.

Das Schild wirkt zusammen mit dem Querträger, insbesondere zusammen mit dem vorderseitig am Querträger angeordneten Schließblech, als Aufprallfläche und trägt auf diese Weise zur verbesserten Crashperformance der erfindungsgemäßen Stoßfängeranordnung bei. Insbesondere können in Kompatibilitätscrashtests mit einer sogenannten MPDB (Mobile Progressive Deformable Barrier)-Barriere eine gute bzw. niedrige maximale Deformations- bzw. Eindringwerte erreicht werden.

Der Querträger erstreckt sich zwischen den inneren Seitenwänden der Crashboxen in y-Richtung des Kraftfahrzeugs.

Ein Fahrzeugkoordinatensystem kennzeichnet die Achsen innerhalb eines Kraftfahrzeugs. Die x-Achse entspricht der Fahrzeuglängsachse, die y-Achse entspricht der Fahrzeugquerachse und die z-Achse entspricht der Fahrzeughochachse.

Eine vorteilhafte Ausführungsform des Querträgers sieht vor, dass dieser ein U-förmiges oder hutförmiges Strebenprofil und ein Schließblech aufweist.

Vorzugsweise weist der Querträger eine Frontseite auf, wobei die Frontseite durch ein Schließblech abgedeckt ist. Eine für die Praxis vorteilhafte Ausgestaltung sieht vor, dass das an der Frontseite des Querträgers angeordnete Schließblech kürzer als die Frontseite ist. Frontseitige Abschnitte an den Enden des Querträgers sind nicht vom sich über die Länge des Querträgers erstreckenden Schließblech abgedeckt.

Ein Schalenkörper weist in seinem Basisbereich eine vertikale Querschnittsfläche auf. Die vertikale Querschnittsfläche erstreckt sich in y-z-Ebene. Eine mittlere vertikale Querschnittsfläche des Schalenkörpers lässt sich durch den Mittelwert aus der Querschnittsfläche in der y-z-Ebene unmittelbar benachbart innen zur Bodenwand des Schalenkörpers und der Querschnittsfläche in y-z-Ebene unmittelbar an der offenen äußeren Fläche des Schalenkörpers ermitteln. Die mittlere Querschnittsfläche ist mindestens doppelt so groß wie die mittlere Querschnittsfläche einer Crashbox. Die mittlere vertikale Querschnittsfläche einer Crashbox kann ebenfalls ermittelt werden durch den Mittelwert aus der vertikalen Querschnittsfläche am fahrzeugseitigen Anfang der Crashbox und dem schalenkörperseitigen Ende einer Crashbox. Das Flächenverhältnis der mittleren vertikalen Querschnittsfläche des Schalenkörpers im Basisbereich zur mittleren vertikalen Querschnittsfläche der Crashbox beträgt mindestens 2:1 und ist vorzugsweise größer. Insbesondere beträgt das Verhältnis 2,5:1 bis 3,5:1, vorzugsweise ca. 3:1. Alle vorgenannten Verhältnisangaben verstehen sich +/- 25 %.

Ein Aspekt sieht in diesem Zusammenhang vor, dass das Schild den Querträger frontseitig bereichsweise überdeckt oder überlappt. Das Schild erstreckt sich vorzugsweise über die vom Schließblech nicht abgedeckten frontseitigen Abschnitte des Querträgers. Das Schild kann mit dem Querträger im Überlappungsbereich gefügt sein.

Jedes Endmodul weist einen vor der Crashbox angeordneten Frontabschnitt auf, an welchen sich in einem Höhenniveau unterhalb der Crashbox seitlich ein Übergangsabschnitt anschließt, der in einen Seitenabschnitt übergeht.

Der Übergangsabschnitt ist vorzugsweise bogenförmig und/oder gekrümmt gestaltet bzw. konfiguriert und verläuft nach unten und in Richtung zur Fahrzeuglängsseite.

Eine weiterhin vorteilhafte Ausführungsform eines Endmoduls sieht vor, dass der Schalenkörper eine Bodenwand aufweist und der Schalenkörper mit der Bodenwand an einer Crashbox abgestützt ist. Der Schalenkörper als solcher weist im Frontabschnitt eine pralltopfartige Konfiguration auf. Auf diese Weise wird durch die Hintereinanderschaltung des Endmoduls und dessen vor einer Crashbox angeordneten Frontabschnitt des Schalenkörpers und der Crashbox eine doppelt wirkende Absorptionszone gebildet.

Die Crashbox ist im Abstützbereich rückseitig der Bodenwand mit dieser gefügt, insbesondere stoffschlüssig gefügt mittels Stoffschlusselementen wie Verschweißungen.

Eine besonders vorteilhafte Ausgestaltung bzw. Ausführungsform sieht vor, dass der Schalenkörper eine Anschlusskontur aufweist, an welcher das Ende des Querträgers angeschlossen ist. Die Anschlusskontur ist konfigurativ auf die Kontur der Enden des Querträgers abgestimmt. Die Anschlusskontur kann so ausgestaltet sein, dass sie das Ende des Querträgers an dessen Rückwand und den beiden seitlichen Schenkeln umgreift. Des Weiteren kann die Anschlusskontur stutzenförmig gestaltet sein, wobei der Stutzen in ein Ende des Querträgers dieses lageorientierend und fesselnd eingreift. Es kann sich auch um eine Stützlaschenkontur handeln, welche innen- und außenseitig das Ende des Querträgers aufnimmt.

Vorzugsweise greift jeweils ein Ende des Querträgers zumindest partiell formschlüssig in die Anschlusskontur ein und ist mit dem Schalenkörper gefügt.

Formschlüssig bedeutet erfindungsgemäß in diesem Zusammenhang insbesondere, dass ein geometrischer Hinterschnitt zwischen dem Querträger und dem Schalenkörper vorhanden ist, insbesondere in Richtung der Mittellängsachse bzw. der y-Achse.

Die formschlüssige Verbindung zwischen dem Ende des Querträgers und der Anschlusskontur im bzw. am Schalenkörper fesselt die Bauteile in x-Achse, y-Achse und z-Achse, also in drei Ebenen.

Der Schalenkörper weist einen vor einer Crashbox angeordneten Basisbereich und einen sich an den Basisbereich anschließenden Schürzenabschnitt auf. Der Schürzenabschnitt erstreckt sich in einem Höhenniveau unterhalb der Crashboxen nach außen. Die Schalenkontur des Schalenkörpers läuft vom Basisbereich gemuldet in den rinnenförmig profilierten Schürzenabschnitt über. Der Übergang zwischen Basisbereich und Schürzenabschnitt verläuft bogenförmig und gekrümmt nach unten und in Richtung zur Fahrzeuglängsseite, also zur Außenseite eines Fahrzeugs. Im vertikalen Querschnitt besitzt der Schürzenabschnitt eine U-förmig gemuldete Kanalform mit der durch die Bodenwand und den Seitenwänden gebildeten Schalenkontur. Der Schürzenabschnitt des Schalenkörpers und entsprechend der Seitenabschnitt eines Endmoduls verläuft aus dem Frontabschnitt des Endmoduls in Richtung Fahrzeugseitenwand und hier insbesondere in Richtung Radkasten, vorzugsweise etwa in Richtung der mittleren Höhe des Fahrzeugrads.

Der Schalenkörper ist im Basisbereich um zumindest das Doppelte größer bzw. höher als der Querträger. Die Höhe ist gemessen in z-Achse, jeweils zwischen den am weitesten auseinander liegenden Stellen des Schalenkörpers an den oberen und unteren Seitenwänden des Basisbereichs und des Querträgers. Ein vorteilhaftes Verhältnis der Höhe des Schalenkörpers zur Höhe des Querträgers beträgt 2:1 bis 4:1, jeweils +/- 25 %.

Jedes Ende des Querträgers bzw. der jeweilige Endabschnitt am Ende des Querträgers kann sich innerhalb des Schalenkörpers erstrecken, wobei das Ende bzw. der Endabschnitt des Querträgers sich bis in den Bereich vor eine Crashbox erstreckt. Zwischen dem Ende des Querträgers und der Crashbox befindet sich die Bodenwand des Schalenkörpers. Frontseitig ist der Schalenkörper durch das Schild abgedeckt. Das Ende des Querträgers befindet sich hinter dem Schild.

Eine Formschlussverbindung zwischen dem Querträger und dem Schalenkörper, insbesondere dem Strebenprofil des Querträgers und dem Schalenkörper, kann durch ein Klammerelement oder ein Hakenelement, beispielsweise eine nasenförmige Umstellung oder Klemmlasche, jeweils stirnseitig an einem Ende des Strebenprofils ausgeführt sein. Ein solches Formschlusselement ist aus der Ebene der Rückwand des Strebenprofils umgeformt und greift durch eine Ausnehmung im Schalenkörper oder greift in eine Gegenaufnahme an einem Schalenkörper des Endmoduls. Eine praktisch vorteilhafte Ausgestaltung sieht eine Keilverbindung zwischen dem Ende eines Querträgers und dem Schalenkörper vor, bei der sich Schrägflächen gegeneinander abstützen, so dass eine kraft- und formschlüssige Fügung der Bauteilpartner erfolgt. Insbesondere bei einer deformationsbedingten Zugbelastung des Querträgers in y-Richtung erfolgt ein Zusammenwirken von Schalenkörper und Querträger über die Anschlusskontur und das formschlüssig und kraftschlüssig darin aufgenommene Ende des Querträgers.

Die Crashbox kann stirnseitig eine insbesondere gestufte Stützkontur aufweisen, welche mit einer Gegenstützkontur am Schalenkörper zusammenwirkt. Insbesondere weisen die horizontalen und/oder vertikalen nach vorne zum Schalenkörper des Endmoduls gerichteten Stirnwände der Crashbox eine Stufe oder eine ähnlich gestaltete Stützkontur auf. Eine komplementär zur Stützkontur gestaltete Gegenstützkontur am Schalenkörper liegt an der Stützkontur an. Insbesondere sind die Crashbox und der Schalenkörper stoffschlüssig miteinander gefügt.

Ein praktisch vorteilhafter Aspekt sieht vor, dass eine Abschlepphakenanbindung innerhalb einer Crashbox oder im Bereich benachbart zu einer Crashbox und dem Frontabschnitt eines Endmoduls vorgesehen ist. Insbesondere erstreckt sich eine Gewindehülse der Abschlepphakenanbindung durch das Schild und/oder den Schalenkörper und ist an wenigstens einer der Komponenten bevorzugt an beiden gefügt.

Die Stoßfängeranordnung und deren Bauteile bestehen aus Stahlblech. Insbesondere können ultrahochfeste Kaltformstähle für den Querträger ebenso wie für die Crashboxen, die Schalenkörper und/oder die Schilde oder Schließbleche zum Einsatz gelangen. Vorteilhaft können die Bauteile als warmgeformte und pressgehärtete Stahlbauteile ausgeführt sein. Insbesondere die Schalenkörper der Endmodule können warmgeformt und pressgehärtet sein, wohingegen die Schilde aus ultrahochfestem Kaltformstahl bestehen. Ebenso können der Querträger bzw. dessen Strebenprofil und das Schließblech warmgeformt und pressgehärtete Stahlbauteile sein. Auch eine Kombination von Bauteilen aus warmgeformtem und pressgehärtetem Stahl mit Bauteilen aus Kaltformstählen ist vorteilhaft. Insbesondere das Strebenprofil des Querträgers ist ein warmgeformtes und pressgehärtetes Stahlbauteil, wohingegen das frontseitig vorgesehene Schließblech aus einem Kaltformstahl, insbesondere einem ultrahochfesten Kaltformstahl, besteht.

Die Schalenkörper weisen vorzugsweise eine Zugfestigkeit Rm von größer oder gleich (≥) 1.350 MPa auf. Die obere Grenze der Zugfestigkeit liegt bei den dem Fachmann bekannten Werten von UHSS (Ultra High Strength Steel)-Stählen oder AHSS (Advanced High Strength Steel)-Stählen.

Auch wenn eine vorteilhafte Ausgestaltung des Querträgers vorsieht, dass dieser ein zur Frontseite offenes U-förmiges oder hutförmiges Strebenprofil aufweist, welches durch ein Schließblech verschlossen oder zumindest über den überwiegenden Teil seiner Länge verschlossen ist, kann der Querträger auch ein geschlossenes Hohlprofil besitzen oder rollgeformt sein. Der Querträger weist ebenfalls bevorzugt eine Zugfestigkeit Rm von größer oder gleich (≥) 1.350 MPa auf.

Eine vorteilhafte Ausführungsform eines Schalenkörpers sieht vor, dass dieser in randseitigen Wandabschnitten eine Sicke, eine Falzung und/oder eine Umstellung aufweist. Solche Sicken, Falzungen oder Umstellungen erstrecken sich entlang von randseitigen Wandabschnitten des Schalenkörpers. Die Formgebungen haben eine versteifende Funktion. Weiterhin können sie Funktionsflächen entlang der randseitigen Wandabschnitte bilden, wo die Abstützung der frontseitigen Schilder oder die Anbindung der Endabschnitte bzw. der Enden des Querträgers erfolgt.

Ein weiterer erfinderischer Aspekt sieht vor, dass die Bauteile der Stoßfängeranordnung, also der Querträger oder das Strebenprofil und das Schließblech des Querträgers sowie die Endmodule bzw. die Schalenkörper und die Schilde in ihren jeweiligen Fügebereichen über eine Mischfügetechnik miteinander gefügt sind. Hierbei kommt eine Kombination von Stoffschlusselementen, vorzugsweise Schweißverbindungen, und Formschlusselementen wie Keilkörper und Keilflächen, Verprägungen, Verclinchungen oder Verhakungen zur Anwendung. Es versteht sich, dass Schraub- oder Bolzenverbindungen für die Fügung zwischen Bauteilkomponenten alleine oder in Mischfügetechnik eingesetzt werden können.

Die Crashperformance kann weiter verbessert werden, wenn unterhalb des Querträgers ein Querholm und/oder zumindest eine Stützstrebe angeordnet ist. Ein Querholm erstreckt sich in y-Richtung quer mit Abstand in z-Richtung unterhalb des Querträgers. Die Anbindung des Querholms erfolgt beispielsweise über Halter, die im unteren Bereich der Endmodule festgelegt sind. Der Querholm kann auch an einem weiteren Paar von Crashboxen oder ähnlich konfigurierten Pralldämpfern abgestützt sein. Der Querholm ist mit den Crashboxen in zweckentsprechender Weise verbunden.

Eine Stützstrebe kann sich beispielsweise von einem unteren Bereich eines Endmoduls schräg in Richtung zum Querträger erstrecken. Eine Querstrebe kann hierbei rückseitig an ein Schild angeschlossen sein. Auf diese Weise kann eine zusätzliche bereichsweise Aussteifung des Systems realisiert werden, welches das Deformations- und Energieabsorptionsverhalten bei einem seitlichen Aufprall bei einem seitlichen Aufprall auf die Stoßfängeranordnung verbessert.

Die Wandstärken der einzelnen Bauteile der Stoßfängeranordnung, also von Strebenprofil, Schließblech, Schalenkörper und Schild, können gleich oder voneinander verschieden sein. Insbesondere können auch das Strebenprofil, das Schließblech, die Schalenkörper oder die Schilde selbst unterschiedliche Wanddicken aufweisen. Durch einen partiell unterschiedlichen Wanddickenverlauf können Solldeformationszonen vorgegeben sein. Darüber hinaus tragen solche Ausgestaltungen zu einer Gewichtsoptimierung bei.

Die Erfindung ist nachfolgend anhand von in den Zeichnungen dargestellten Ausführungsbeispielen näher beschrieben. Es zeigen:
- Figur 1: eine erfindungsgemäße Kraftfahrzeug-Stoßfängeranordnung in einer Frontansicht;
- Figur 2: die Stoßfängeranordnung in einer rückwärtigen Ansicht vom Kraftfahrzeug aus;
- Figur 3: einen Schnitt durch die Darstellung der Figur 1 entlang der Linie A-A;
- Figur 4: einen Schnitt durch die Darstellung der Figur 1 entlang der Linie B-B;
- Figur 5: einen Schnitt durch die Darstellung der Figur 1 entlang der Linie C-C;
- Figur 6: eine Ansicht auf einen Schalenkörper;
- Figur 7: einen Ausschnitt aus dem seitlichen Bereich einer Stoßfängeranordnung mit der Darstellung des Schalenkörpers eines Endmoduls und der schematisch angedeuteten Anbindung eines Querträgers;
- Figur 8: eine Ansicht auf ein Endmodul mit der technisch schematisierten Darstellung der Abdeckkontur eines Schilds sowie der Darstellung der Crashboxkontur;
- Figur 9: die Darstellung einer möglichen Modifikation in der Anordnung des Querträgers und dessen Anbindung an ein Endmodul;
- Figur 10: eine weitere Modifikation der Stoßfängeranordnung in technisch schematisierter Darstellung;
- Figur 11: eine weitere Modifikation der Stoßfängeranordnung mit der Darstellung des Schalenkörpers eines Endmoduls und dem endmodulseitigen Ende eines Querträgers und
- Figur 12: einen Ausschnitt aus dem Anbindungsbereich zwischen einer Crashbox und einem Schalenkörper in perspektivischer Darstellungsweise.

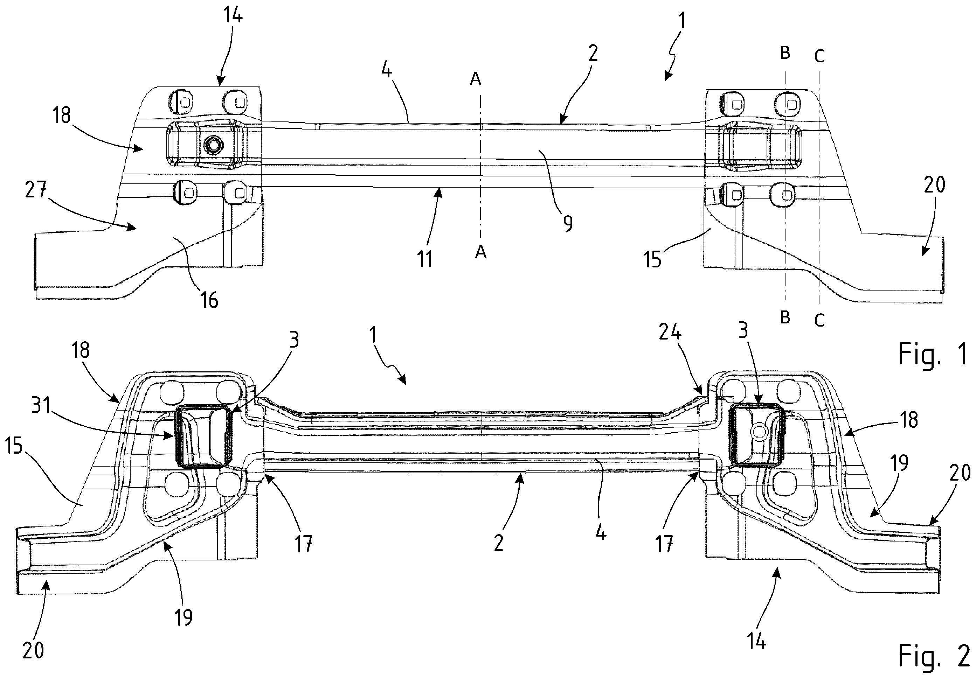

Soweit zweckmäßig werden in den Figuren 1 bis 11 für gleiche oder ähnliche Bauteile bzw. Bauteilkomponenten die gleichen Bezugszeichen verwendet, auch wenn aus Gründen der Vereinfachung auf eine wiederholte Beschreibung verzichtet wird.

Anhand der Figuren 1 bis 5 ist ein erstes Ausführungsbeispiel einer erfindungsgemäßen Stoßfängeranordnung 1 für ein Kraftfahrzeug beschrieben. Die Stoßfängeranordnung 1 kommt im Front- oder Heckbereich, insbesondere im Frontbereich der Karosserie eines Kraftfahrzeugs zum Einsatz.

Die Stoßfängeranordnung 1 weist einen quer zu den hier nicht dargestellten Längsträgern eines Kraftfahrzeugs angeordneten Querträger 2 auf. Die Stoßfängeranordnung 1 ist über Crashboxen 3, die endseitig des Querträgers 2 vorgesehen sind, an den Längsträgern abgestützt. Die Crashboxen 3 sollen zusätzlich zum Querträger 2 die aus einem Anprall resultierende Energie absorbieren, indem diese in Verformungsarbeit umgewandelt wird.

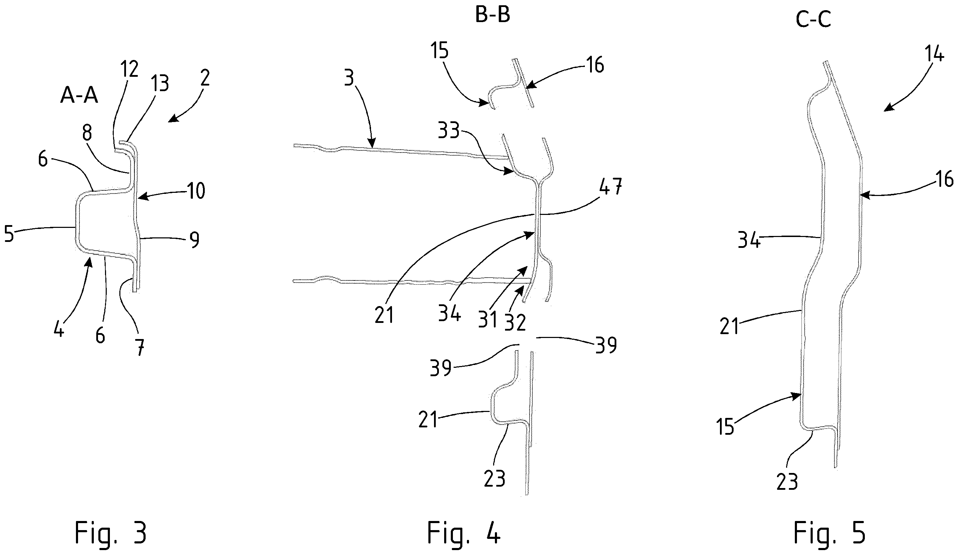

Der Querträger 2 erstreckt sich zwischen den inneren Seitenwänden der Crashboxen 3. Der Querträger 2 weist ein einteilig aus einem Metallblech, insbesondere aus Stahlblech geformtes U-förmiges oder hutförmiges Strebenprofil 4 auf. Das Strebenprofil 4 besitzt eine Rückwand 5 mit zwei Schenkeln 6, an welche sich endseitig jeweils ein nach außen gerichteter Längsflansch 7, 8 anschließt. Frontseitig des Strebenprofils 4 ist ein Schließblech 9 vorgesehen. Das Schließblech 9 erstreckt sich in y-Richtung über nahezu die gesamte Länge der Frontseite 10 des Querträgers 2. Im mittleren Längenabschnitt 11 des Querträgers 2 (siehe Figur 3) schließt sich an den oberen Längsflansch 8 eine nach hinten in x-Richtung zum Fahrzeug gerichtete Umstellung 12 an. Das Schließblech 9 weist im mittleren Längenabschnitt 11 ebenfalls eine nach hinten gerichtete Umstellung 13 auf, welche die Umstellung 12 am oberen Längsflansch 8 des Strebenprofils 4 übergreift. Am unteren Längsflansch 7 des Strebenprofils 4 liegt das Schließblech 9 im mittleren Längenbereich 11 des Querträgers 2 am Strebenprofil 4 an.

Die Stoßfängeranordnung 1 weist endseitig jeweils ein Endmodul 14 auf. Jedes Endmodul 14 besitzt einen Schalenkörper 15 und ein den Schalenkörper 15 frontseitig abdeckendes Schild 16. Der Schalenkörper 15 ist mit der Crashbox 3 gefügt. Ein Ende 17 des Querträgers 2 ist mit dem Schalenkörper 15 gefügt. Die Fügung zwischen den Bauteilkomponenten erfolgt insbesondere stoffschlüssig mittels Schweißen.

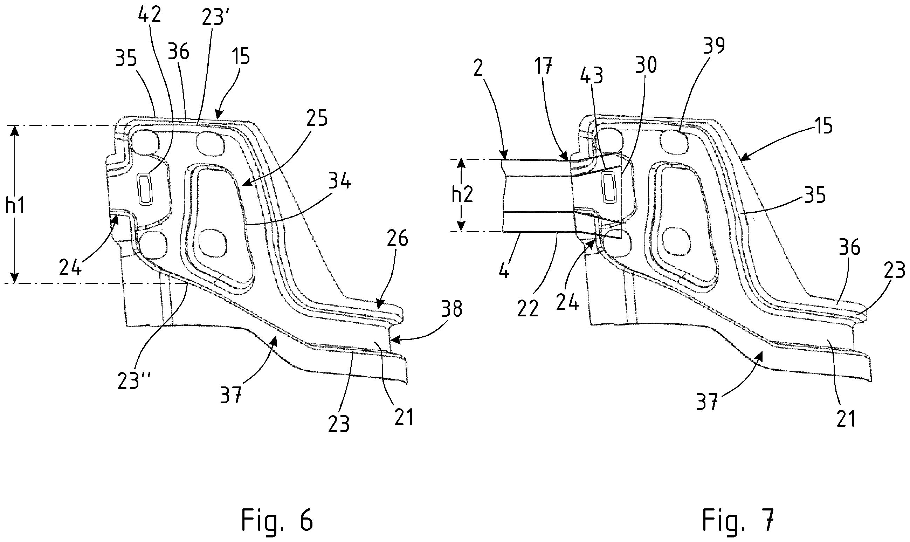

Einen Schalenkörper 15 in einer Ansicht zeigt die Figur 6.

Ein Endmodul 14 weist einen vor der Crashbox 3 angeordneten Frontabschnitt 18 auf, an welchen sich in einem Höhenniveau unterhalb der Crashbox 3 seitlich ein Übergangsabschnitt 19 anschließt, der in einen Seitenabschnitt 20 übergeht.

Der Übergangsabschnitt 19 ist bogenförmig konfiguriert bzw. verläuft gekrümmt nach unten und in Richtung zur Fahrzeuglängsseite bzw. zum Radkasten.

Der Schalenkörper 15 besitzt eine Bodenwand 21. Außenseitig bzw. an der zum Fahrzeug gerichteten Außenfläche der Bodenwand 21 des Schalenkörpers 15 ist jeweils eine Crashbox 3 abgestützt. Zu den Endabschnitten 22 des Querträgers 2 hin weist ein Schalenkörper 15 in seiner von der Bodenwand 21 nach vorne gerichteten und zum Ende 17 des Querträgers 2 benachbarten Seitenwand 23 eine Anschlusskontur 24 auf, an welche das Ende des Querträgers 2 angeschlossen ist.

Der Schalenkörper 15 weist einen vor einer Crashbox 3 angeordneten Basisbereich 25 und einen sich an den Basisbereich 25 anschließenden Schürzenabschnitt 26 auf. Der Schürzenabschnitt 26 erstreckt sich in einem Höhenniveau unterhalb der Crashbox 3 nach außen in Richtung zu den Fahrzeuglängsseiten.

Die Schalenkontur des Schalenkörpers 15 läuft vom Basisbereich 25 gemuldet in den rinnenförmig profilierten Schürzenabschnitt 26 über. Der Übergang 37 zwischen Basisbereich 25 und Schürzenabschnitt 26 verläuft bogenförmig und gekrümmt nach unten und in Richtung zur Fahrzeuglängsseite, also zur Außenseite eines Fahrzeugs. Im vertikalen Querschnitt besitzt der Schürzenabschnitt 26 eine U-förmig gemuldete Kanalform 38 mit der durch die Bodenwand 21 und den Seitenwänden 23 gebildeten Schalenkontur. Die Kanalform 38 läuft am Ende des Schürzenabschnitts 26 offen aus.

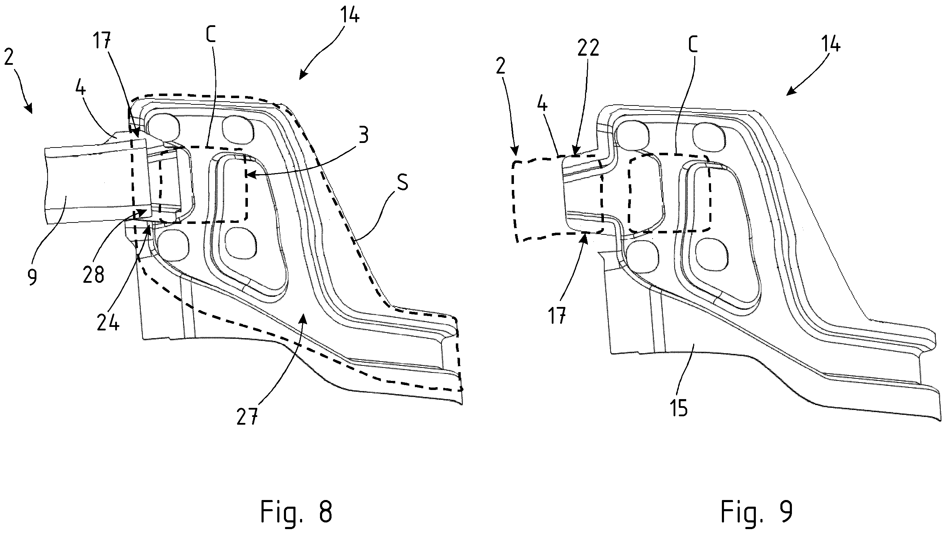

Das Schild 16 ist jeweils frontseitig vor den Schalenkörpern 15 angeordnet und ist in einem Bogenabschnitt 27 gekrümmt konfiguriert. Das Schild 16 kann den Querträger 2 frontseitig bereichsweise überlappen. Eine solche Ausgestaltung zeigt die Figur 8. Das Ende 17 des Querträgers 2 liegt in der Anschlusskontur 24 des Schalenkörpers 15. Das Schild 16 deckt die Anordnung frontseitig ab. Hierbei liegt das Schild 16 flächig an Parallelflächen des Schalenkörpers 15 an und überlappt das Ende 17 und das Schließblech 9 des Querträgers 2 in einem Überlappungsbereich 28.

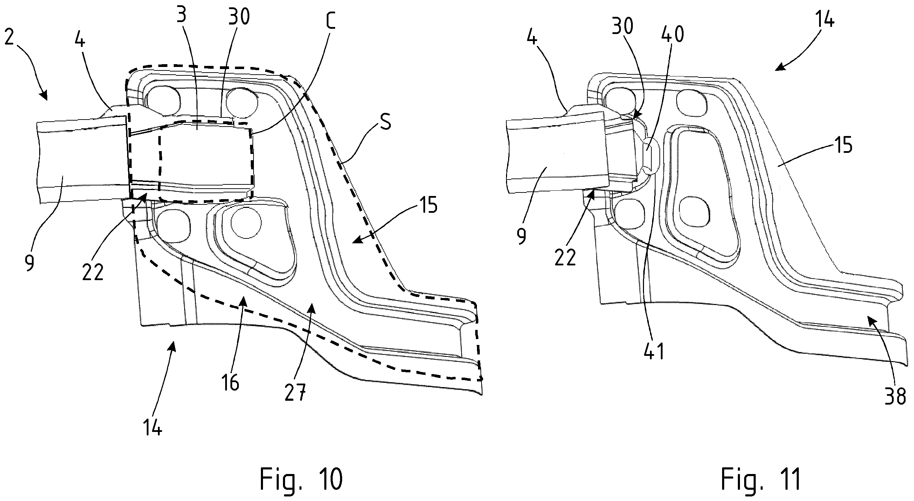

Bei einer Ausführungsform einer Stoßfängeranordnung 1, wie anhand der Figur 10 erläutert, ist das Schließblech 9 kürzer ausgeführt als die Frontseite 10 des Querträgers 2, so dass kurze Abschnitte 29 an der Frontseite 10 des Querträgers 2 nicht durch das Schließblech 9 abgedeckt sind. Diese frontseitigen Abschnitte 29 werden durch das Schild 16 abgedeckt, wobei das Schließblech 9 und das Schild 16 in einem Stoßbereich annähernd bündig aneinander liegen.

Die Figur 7 zeigt schematisch angedeutet, dass das Ende 17 des Querträgers 2 zumindest partiell formschlüssig in die Anschlusskontur 24 eingreift. Das Ende 17 ist mit dem Schalenkörper 15 in dem Bereich der Anschlusskontur 24 gefügt. Das Ende 17 des Querträgers 2 bzw. das Ende 30 des Strebenprofils 4 ist trapezförmig konfiguriert. Es erfolgt eine formschlüssige Fügung, die gegebenenfalls durch Stoffschlusselemente ergänzt ist.

Grundsätzlich ist auch eine Mischfügetechnik von Fügepartnern möglich, bei der beispielsweise das Strebenprofil 4 und der Schalenkörper 15 mittels Stoffschlusselementen und Formschlusselementen gefügt sind.

Der Schalenkörper 15 ist aus einem Stahlblech geformt, insbesondere aus einem Mangan-Bor-Stahlblech. Insbesondere ist ein Schalenkörper 15 warmgeformt und pressgehärtet und weist eine Zugfestigkeit Rm von größer oder gleich (≥) 1.350 MPa auf.

Die Schilde 16 können ebenfalls warmgeformt und pressgehärtet sein mit vergleichbaren Werkstoffeigenschaften. Die Schilde 16 können auch kaltgeformt sein und aus ultrahochfesten Kaltformstählen bestehen.

Auch das Strebenprofil 4 des Querträgers 2 besitzt eine Zugfestigkeit Rm von größer oder gleich (≥) 1.350 MPa. Das Strebenprofil 4 ist vorzugsweise warmgeformt und pressgehärtet.

Das Ende 17 des Querträgers 2 und ein endseitiger Längenabschnitt dzw. der Endabschnitt 22 des Querträgers 2 kann sich bis in den Schalenkörper 15 hinein erstrecken und zwar bis in einen Bereich, der vor der Crashbox 3 liegt. Eine solche Ausgestaltung zeigt die Figur 8. Die Crashboxenkontur ist durch die Strichlinie C angedeutet. Die Kontur des Schließblechs 9 verdeutlicht die Strichlinie S. Frontseitig ist das Endmodul 14 ebenso wie der bis in den Schalenkörper 15 ragende endseitige Längenabschnitt 22 bzw. das Ende 17 des Querträgers 2 durch das Schild 16 abgedeckt.

In der Darstellung der Figur 9 erkennt man die Crashboxenkontur, verdeutlicht durch die gestrichelte Linie C. Die Kontur des Endes 17 des Querträgers 2 ist durch die gestrichelte Linie E angedeutet. Man erkennt, dass der Querträger 2 bzw. dass sich das Ende 17 des Querträgers 2 nicht bis zur Crashboxenkontur C erstreckt. Das Ende 17 des Querträgers 2 ist an den Schalenkörper 15 angebunden, endet jedoch mit Abstand in y-Richtung vor einer Crashbox 3.

Bei der in der Figur 10 dargestellten Modifikation erstreckt sich das Ende 30 des Strebenprofils 4 des Querträgers 2 innerhalb des Schalenkörpers 15 vor der Crashbox 3 und geht über die ganze Crashboxkontur C hinaus. Das Schließblech 9 des Querträgers 2 endet vor dem Schild 16. Möglich ist es aber auch, dass sich das Schließblech 9 über das Ende 30 des Strebenprofils 4 erstreckt, welches vor der Crashbox 3 liegt. Zwischen dem Querträger 2 bzw. dem Ende 17 befindet sich auf der Fahrzeugseite die Bodenwand 21 des Schalenkörpers 15. Frontseitig ist das Endmodul 14 bzw. der Schalenkörper 15 durch das Schild 16 abgedeckt.

Eine Crashbox 3 weist frontseitig, insbesondere in den frontseitigen in z-Achse orientierten vertikalen Stirnseiten 31, eine gestufte Stützkontur 32 auf, welche mit einer Gegenstützkontur 33 am Schalenkörper 15 zusammenwirkt. Dies ist in der Darstellung der Figur 4 andeutungsweise dargestellt und insbesondere anhand der Figur 11 zu erkennen. Der Schalenkörper 15 (vgl. Figuren 6 und 4) weist in seiner Bodenwand 21 muldenförmige Einprägungen 34 auf. Die Einprägungen 34 sind in Richtung zur Außenseite bzw. in Richtung zum Schild 16 eingeformt. Auch die Figur 5 zeigt eine solche Einprägung 34 bzw. Mulde. Durch die Übergänge an den Einprägungen 34 wird die Gegenstützkontur 33 gebildet, an welcher sich die Stützkontur 32 abstützt.

Ein Schalenkörper 15 weist in randseitigen Wandabschnitten 35 eine Umstellung 36 auf, welche eine versteifende Funktion in den randseitigen Wandabschnitten 35 hat.

Sowohl im Schalenkörper 15 als auch im Schild 16 können Öffnungen 39 bzw. Durchbrechungen 39 vorhanden sein (vgl. beispielsweise Figuren 4 oder 7). Die Öffnungen 39 können auch als Durchzüge ausgeführt sein.

Bei der Modifikation der Stoßfängeranordnung 1 bzw. der Anbindung und Fügung des Endes 17 des Querträgers 2 bzw. des Endes 30 des Strebenprofils 4, wie in der Figur 11 dargestellt, ist am Ende 30 ein klammer- bzw. hakenartiges Fügeelement 40 vorgesehen. Diese greift durch ein Widerlagerelement 41 im Schalenkörper 15. Bei dem Widerlagerelement 41 kann es sich beispielsweise um eine Durchbrechung in der Bodenwand 21 des Schalenkörpers 15 handeln. Das Widerlagerelement 41 kann auch schlitzförmig gestaltet sein ebenso wie als aus- oder eingeprägtes formschlüssig wirkendes Widerlagerelement 41.

Im Schalenkörper 15 ist innerhalb der Anschlusskontur ein Formschlusselement 42 (siehe Figur 6). Hierbei kann es sich um eine Vertiefung oder Erhebung handeln. Das Formschlusselement 42 wirkt mit einem entsprechend komplementär ausgebildeten Formschlusselement 43 am Ende 30 des Strebenprofils 4 des Querträgers 2 zusammen. Das Formschlusselemente 43 ist in der Figur 7 dargestellt, wobei darauf hinzuweisen ist, dass das Formschlusselemente 43 in der Rückwand 5 des Strebenprofils 4 vorgesehen ist.

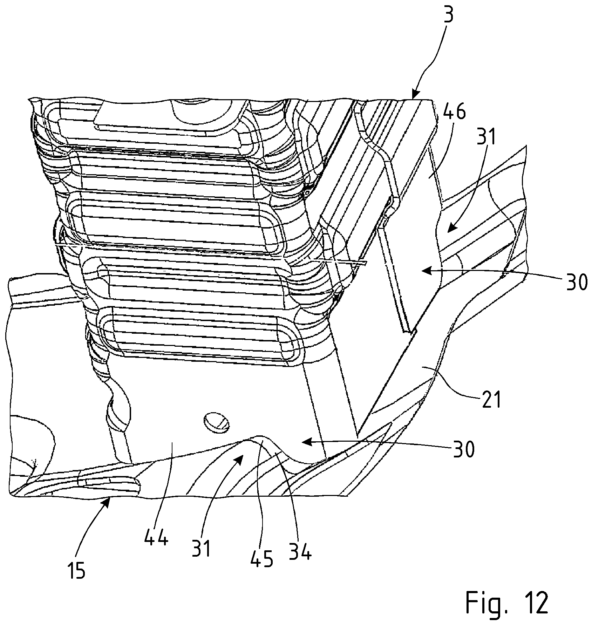

Die Figur 12 verdeutlicht nochmals die Anbindung und Abstützung einer Crashbox 3 rückseitig an der Bodenwand 21 eines Schalenkörpers 15. Die Crashbox 3 weist stirnseitig eine gestufte Stützkontur 32 auf mit einer an einer Seitenwand 44 der Crashbox 3 ausgebildeten Stufe 45. Die Stützkontur 32 wirkt mit einer Gegenstützkontur 33 am Schalenkörper 15 zusammen. Die Gegenstützkontur 33 ist an einem Bogenabschnitt einer Mulde bzw. Einprägung 34 der Gegenstützkontur 33 gebildet. Entsprechende Stützkonturen 32 und Gegenstützkonturen 33 sind beidseitig, also auch auf der gegenüberliegenden Seite der Crashbox 3 und der dort vorgesehenen Seitenwand 46 ausgebildet.

Auf diese Weise wird die Crashbox 3 am Schalenkörper 15 in z-Achse und in y-Achse gefesselt und stabilisiert.

Ein Endmodul 14 weist im Basisbereich 25 des Schalenkörpers 15 eine vertikale Querschnittsfläche auf, die zumindest doppelt so groß, insbesondere ein Mehrfaches von der vertikalen Querschnittsfläche einer Crashbox 3, ist. Wesentlich ist das Verhältnis der Querschnittsflächen des Basisbereichs 25 von Schalenkörper 15 und Crashbox 3 zueinander, wobei das vertikale Querschnittsverhältnis des Basisbereichs 25 und das vertikale Querschnittsverhältnis der Crashbox 3 mindestens 2:1, vorzugsweise 3:1 ist. Das Querschnittsverhältnis kann von 2:1 bis 4:1, insbesondere bis 3,5:1, betragen, jeweils +/- 25 %.

Zur Ermittlung des Querschnittsverhältnisses kann jeweils auf ein mittleres vertikales Querschnittsverhältnis abgestellt werden. Hierbei kann die Fläche ermittelt werden im Bereich der Bodenwand 21 des Schalenkörpers 15, in der Mitte des Basisbereichs 25 und an der offenen Außenseite. Gleiches gilt für eine Crashbox 3. Dort kann das Querschnittsverhältnis ermittelt werden am Anfang, in der Mitte und am Ende der Crashbox 3 und aus den jeweiligen Querschnittsverhältnissen ein Mittelwert gebildet werden.

Über den querschnittsmäßig deutlich größeren Basisbereich 25 des Schalenkörpers 15 eines Endmoduls 14 erfolgt eine großflächige Kraft- bzw. Energieverteilung bei einem Anprall.

Das Verhältnis der in z-Achse gemessenen Höhe h1 des Schalenkörpers 15 im Basisbereich 25 zwischen seiner oberen Seitenwand 23' und seiner unteren Seitenwand 23" zur in z-Achse gemessenen Höhe h2 des Querträgers 2 ist zwischen 2:1 und 4:1 bemessen jeweils mit einer Toleranz bzw. einem im Rahmen der Auslegungskonzeption vorgenommenen Variation von +/- 25 %.

Wie insbesondere anhand der Figur 4 zu erkennen, kann auch das Schild 16 eine mulden- oder rinnenartige Vertiefung 47 aufweisen. Im Bereich der muldenartigen Vertiefung liegt das Schild 16 an der Bodenwand 21 des Schalenkörpers 15 an und stützt sich an diesem ab. Im Kontaktbereich können die Bodenwand 21 und das Schild 16 gefügt sein, beispielsweise stoffschlüssig gefügt sein. Dies kann auch durch eine Verklebung erfolgen.

Grundsätzlich kann unterhalb des Querträgers 2 ein sich in y-Richtung erstreckender Querholm vorgesehen sein.

### Bezugszeichen:

- 1 -: Stoßfängeranordnung
- 2 -: Querträger
- 3 -: Crashbox
- 4 -: Strebenprofil v. 2
- 5 -: Rückwand v. 4
- 6 -: Schenkel
- 7 -: unterer Längsflansch
- 8 -: oberer Längsflansch
- 9 -: Schließblech
- 10 -: Frontseite v. 2
- 11 -: mittlerer Längenabschnitt
- 12 -: Umstellung
- 13 -: Umstellung
- 14 -: Endmodul
- 15 -: Schalenkörper
- 16 -: Schild
- 17 -: Ende v. 2
- 18 -: Frontabschsnitt v. 14
- 19 -: Übergangsabschnitt
- 20 -: Seitenabschnitt
- 21 -: Bodenwand v. 15
- 22 -: Endabschnitt v. 2
- 23 -: Seitenwand
- 23' -: obere Seitenwand
- 23" -: untere Seitenwand
- 24 -: Anschlusskontur
- 25 -: Basisbereich
- 26 -: Schürzenabschnitt
- 27 -: Bogenabschnitt
- 28 -: Überlappungsbereich
- 29 -: Abschnitt
- 30 -: Ende v. 4
- 31 -: Stirnseite v. 3
- 32 -: Stützkontur
- 33 -: Gegenstützkontur
- 34 -: Einprägung
- 35 -: Wandabschnitt v. 15
- 36 -: Umstellung
- 37 -: Übergang
- 38 -: Kanalform
- 39 -: Öffnung
- 40 -: Fügeelement
- 41 -: Widerlagerelement
- 42 -: Formschlusselement
- 43 -: Formschlusselement
- 44 -: Seitenwand
- 45 -: Stufe
- 46 -: Seitenwand
- 47 -: Vertiefung v. 16

- C -: Crashboxkontur
- S -: Schildkontur
- h1 -: Höhe v. 15
- h2 -: Höhe v. 2

## Patentansprüche

1. Stoßfängeranordnung für ein Kraftfahrzeug, welche einen Querträger (2) und jeweils endseitig des Querträgers (2) angeordnete Crashboxen (3) sowie äußere Endmodule (14) aufweist, wobei jedes Endmodul (14) einen Schalenkörper (15) aufweist, wobei der Schalenkörper (15) mit einer Crashbox (3) und ein Ende (17) des Querträgers (2) mit dem Schalenkörper (15) gefügt ist, **dadurch gekennzeichnet, dass** jeder Schalenkörper (15) einen vor einer Crashbox (3) angeordneten Basisbereich (25) und einen sich an den Basisbereich (25) anschließenden Schürzenabschnitt (26) aufweist, wobei sich der Schürzenabschnitt (26) in einem Höhenniveau unterhalb der Crashbox (3) nach Außen erstreckt.

2. Stoßfängeranordnung nach Anspruch 1, **dadurch gekennzeichnet, dass** der Schalenkörper (15) frontseitig zumindest bereichsweise durch ein Schild (16) abgedeckt ist.

3. Stoßfängeranordnung nach Anspruch 1 oder 2, **dadurch gekennzeichnet, dass** der Querträger (2) ein U-förmiges oder hutförmiges Strebenprofil (4) und ein Schließblech (9) aufweist.

4. Stoßfängeranordnung nach Anspruch 3, **dadurch gekennzeichnet, dass** der Querträger (2) eine Frontseite (10) aufweist und das an der Frontseite (10) des Querträgers (2) angeordnete Schließblech (9) kürzer als die Frontseite (10) ist.

5. Stoßfängeranordnung nach einem der Ansprüche 1 bis 4, **dadurch gekennzeichnet, dass** das Schild (16) den Querträger (2) frontseitig bereichsweise überdeckt oder überlappt.

6. Stoßfängeranordnung nach einem der Ansprüche 1 bis 5, **dadurch gekennzeichnet, dass** jedes Endmodul (14) einen vor der Crashbox (3) angeordneten Frontabschnitt (18) aufweist, an welchen sich in einem Höhenniveau unterhalb der Crashbox (3) seitlich ein Übergangsabschnitt (19) anschließt, der in einen Seitenabschnitt (20) übergeht.

7. Stoßfängeranordnung nach Anspruch 6, **dadurch gekennzeichnet, dass** der Übergangsabschnitt (19) bogenförmig und/oder gekrümmt nach unten und in Richtung zur Fahrzeuglängsseite verläuft.

8. Stoßfängeranordnung nach einem der Ansprüche 1 bis 7, **dadurch gekennzeichnet, dass** jeder Schalenkörper (15) eines Endmoduls (14) eine Bodenwand (21) aufweist und der Schalenkörper (15) mit der Bodenwand (21) an einer Crashbox (3) abgestützt ist.

9. Stoßfängeranordnung nach einem der Ansprüche 1 bis 8, **dadurch gekennzeichnet, dass** der Schalenkörper (15) eine Anschlusskontur (24) aufweist, an welche das Ende (17) des Querträgers (2) angeschlossen ist.

10. Stoßfängeranordnung nach Anspruch 9, **dadurch gekennzeichnet, dass** das Ende (17) des Querträgers (2) zumindest partiell formschlüssig in die Anschlusskontur (24) eingreift und mit dem Schalenkörper (15) gefügt ist.

11. Stoßfängeranordnung nach einem der Ansprüche 1 bis 10, **dadurch gekennzeichnet, dass** sich das Ende (17) des Querträgers (2) innerhalb des Schalenkörpers (15) zumindest bereichsweise bis vor die Crashbox (3) erstreckt.

12. Stoßfängeranordnung nach einem der Ansprüche 1 bis 11, **dadurch gekennzeichnet, dass** die Crashbox (3) stirnseitig eine gestufte Stützkontur (30) aufweist, welche mit einer Gegenstützkontur (31) am Schalenkörper (15) zusammenwirkt.

13. Stoßfängeranordnung nach einem der Ansprüche 1 bis 12, **dadurch gekennzeichnet, dass** die Schalenkörper (15) warmgeformt sowie pressgehärtet sind und/oder eine Zugfestigkeit Rm von größer oder gleich (≥) 1.350 MPa aufweist und die Schilde (16) kaltgeformt sind.

14. Stoßfängeranordnung nach einem der Ansprüche 1 bis 13, **dadurch gekennzeichnet, dass** jeder Schalenkörper (15) in randseitigen Wandabschnitten (35) eine Sicke, eine Falzung und/oder eine Umstellung (36) aufweist.

15. Stoßfängeranordnung nach einem der Ansprüche 1 bis 14, **dadurch gekennzeichnet, dass** der Querträger (2), das Strebenprofil (4), das Schließblech (9), der Schalenkörper (15) und/oder das Schild (16) mittels einer Kombination von Stoffschlusselementen und Formschlusselementen gefügt sind

16. Stoßfängeranordnung nach einem der vorhergehenden Ansprüche, **dadurch gekennzeichnet, dass** das Verhältnis der mittleren vertikalen Querschnittsfläche des Schalenkörpers (15) im Basisbereich (25) zur mittleren vertikalen Querschnittsfläche der Crashbox (3) zwischen 2:1 und 4:1, insbesondere 3:1, jeweils +/- 25 %, bemessen ist.

17. Stoßfängeranordnung nach einem der vorhergehenden Ansprüche, **dadurch gekennzeichnet, dass** das Verhältnis der in z-Achse gemessenen Höhe (h1) des Schalenkörpers (15) im Basisbereich (25) zwischen seiner oberen Seitenwand (23') und seiner unteren Seitenwand (23") zur in z-Achse gemessenen Höhe (h2) des Querträgers (2) zwischen 2:1 und 4:1, jeweils +/- 25 % bemessen ist.

## Claims

1. A bumper arrangement for a motor vehicle, which has a cross member (2) and crash boxes (3) arranged at each end of the cross member (2) as well as outer end modules (14), wherein each end module (14) has a shell body (15), wherein the shell body (15) is joined to a crash box (3) and one end (17) of the cross member (2) is joined to the shell body (15), **characterized in that** each shell body (15) has a base region (25), arranged in front of a crash box (3), and an skirt section (26), adjoining the base region (25), wherein the skirt section (26) extends outwards at a height level below the crash box (3).

2. The bumper arrangement according to claim 1, **characterized in that** the shell body (15) is covered at the front at least in regions by a shield (16).

3. The bumper arrangement according to claim 1 or 2, **characterized in that** the cross member (2) has a U-shaped or hat-shaped strut profile (4) and a closing plate (9).

4. The bumper arrangement according to claim 3, **characterized in that** the cross member (2) has a front side (10) and the closing plate (9) arranged on the front side (10) of the cross member (2) is shorter than the front side (10).

5. The bumper arrangement according to any one of claims 1 to 4, **characterized in that** the shield (16) partially covers or overlaps the cross member (2) on the front side.

6. The bumper arrangement according to any one of claims 1 to 5, **characterized in that** each end module (14) has a front section (18), arranged in front of the crash box (3), to which a transition section (19) is laterally connected at a height level below the crash box (3), which transition section merges into a side section (20).

7. The bumper arrangement according to claim 6, **characterized in that** the transition section (19) is arcuate and/or curved downwards and in the direction of the vehicle longitudinal side.

8. The bumper arrangement according to any one of claims 1 to 7, **characterized in that** each shell body (15) of an end module (14) has a bottom wall (21) and the shell body (15) is supported with the bottom wall (21) on a crash box (3).

9. The bumper arrangement according to any one of claims 1 to 8, **characterized in that** the shell body (15) has a connecting contour (24) to which the end (17) of the cross member (2) is connected.

10. The bumper arrangement according to claim 9, **characterized in that** the end (17) of the cross member (2) at least partially engages in a form-fitting manner in the connecting contour (24) and is joined to the shell body (15).

11. The bumper arrangement according to any one of claims 1 to 10, **characterized in that** the end (17) of the cross member (2) extends within the shell body (15) at least in regions up to the crash box (3).

12. The bumper arrangement according to any one of claims 1 to 11, **characterized in that** the crash box (3) has a stepped support contour (30) on the front side, which cooperates with a counter-support contour (31) on the shell body (15).

13. The bumper arrangement according to any one of claims 1 to 12, **characterized in that** the shell bodies (15) are hot-formed and press-hardened and/or have a tensile strength Rm of greater than or equal to (≥) 1,350 MPa and the shields (16) are cold-formed.

14. The bumper arrangement according to any one of claims 1 to 13, **characterized in that** each shell body (15) has a bead, a fold and/or a turned-over portion (36) in edge-side wall sections (35).

15. The bumper arrangement according to any one of claims 1 to 14, **characterized in that** the cross member (2), the strut profile (4), the closing plate (9), the shell body (15) and/or the shield (16) are joined by means of a combination of material-locking elements and form-locking elements.

16. The bumper arrangement according to any one of the preceding claims, **characterized in that** the ratio of the mean vertical cross-sectional area of the shell body (15) in the base region (25) to the mean vertical cross-sectional area of the crash box (3) is between 2:1 and 4:1, in particular 3:1, in each case +/- 25 %.

17. The bumper arrangement according to any one of the preceding claims, **characterized in that** the ratio of the height (h1), measured in the z-axis, of the shell body (15) in the base region (25) between its upper side wall (23') and its lower side wall (23") to the height (h2) of the cross member (2), measured in the z-axis, is between 2:1 and 4:1, in each case +/- 25 %.

## Revendications

1. Ensemble formant pare-chocs pour un véhicule à moteur, qui présente une traverse (2) et des caissons anticollision (3) disposés respectivement côté extrémité de la traverse (2) ainsi que des modules d'extrémité extérieurs (14), dans lequel chaque module d'extrémité (14) présente un corps de coque (15), dans lequel le corps de coque (15) est assemblé avec un caisson anticollision (3) et une extrémité (17) de la traverse (2) est assemblée avec le corps de coque (15), **caractérisé en ce que** chaque corps de coque (15) présente une zone de base (25) disposée devant un caisson anticollision (3) et une section de tablier (26) se raccordant à la zone de base (25), dans lequel la section de tablier (26) s'étend vers l'extérieur à un niveau de hauteur en dessous du caisson anticollision (3).

2. Ensemble formant pare-chocs selon la revendication 1, **caractérisé en ce que** le corps de coque (15) est recouvert sur la face avant au moins par endroits par un bouclier (16).

3. Ensemble formant pare-chocs selon la revendication 1 ou la revendication 2, **caractérisé en ce que** la traverse (2) présente un profilé d'entretoise (4) en forme de U ou de chapeau et une tôle de fermeture (9).

4. Ensemble formant pare-chocs selon la revendication 3, **caractérisé en ce que** la traverse (2) présente une face avant (10) et que la tôle de fermeture (9) disposée sur la face avant (10) de la traverse (2) est plus courte que la face avant (10).

5. Ensemble formant pare-chocs selon l'une quelconque des revendications 1 à 4, **caractérisé en ce que** le bouclier (16) recouvre ou chevauche sur la face avant par endroits la traverse (2).

6. Ensemble formant pare-chocs selon l'une quelconque des revendications 1 à 5, **caractérisé en ce que** chaque module d'extrémité (14) présente une section avant (18) disposée devant le caisson anticollision (3), à laquelle se raccorde latéralement, à un niveau de hauteur en dessous du caisson anticollision (3), une section de transition (19) qui passe dans une section latérale (20).

7. Ensemble formant pare-chocs selon la revendication 6, **caractérisé en ce que** la section de transition (19) s'étend de manière courbée et/ou de manière incurvée vers le bas et en direction du côté longitudinal du véhicule.

8. Ensemble formant pare-chocs selon l'une quelconque des revendications 1 à 7, **caractérisé en ce que** chaque corps de coque (15) d'un module d'extrémité (14) présente une paroi de plancher (21) et que le corps de coque (15) est soutenu avec la paroi de plancher (21) sur un caisson anticollision (3).

9. Ensemble formant pare-chocs selon l'une quelconque des revendications 1 à 8, **caractérisé en ce que** le corps de coque (15) présente un contour de raccordement (24) auquel est raccordée l'extrémité (17) de la traverse (2).

10. Ensemble formant pare-chocs selon la revendication 9, **caractérisé en ce que** l'extrémité (17) de la traverse (2) vient en prise au moins en partie par complémentarité de forme avec le contour de raccordement (24) et est assemblée avec le corps de coque (15).

11. Ensemble formant pare-chocs selon l'une quelconque des revendications 1 à 10, **caractérisé en ce que** l'extrémité (17) de la traverse (2) s'étend à l'intérieur du corps de coque (15) au moins par endroits jusque devant le caisson anticollision (3).

12. Ensemble formant pare-chocs selon l'une quelconque des revendications 1 à 11, **caractérisé en ce que** le caisson anticollision (3) présente sur la face frontale un contour d'appui étagé (30), qui coopère avec un contre-contour d'appui (31) sur le corps de coque (15).

13. Ensemble formant pare-chocs selon l'une quelconque des revendications 1 à 12, **caractérisé en ce que** les corps de coque (15) sont formés à chaud et trempés à la presse et/ou présentent une résistance à la traction Rm supérieure ou égale à (>) 1 350 MPa et les boucliers (16) sont formés à froid.

14. Ensemble formant pare-chocs selon l'une quelconque des revendications 1 à 13, **caractérisé en ce que** chaque corps de coque (15) présente une moulure, un pli et/ou une transition (36) dans des sections de paroi (35) côté bord.

15. Ensemble formant pare-chocs selon l'une quelconque des revendications 1 à 14, **caractérisé en ce que** la traverse (2), le profilé d'entretoise (4), la tôle de fermeture (9), le corps de coque (15) et/ou le bouclier (16) sont assemblés au moyen d'une combinaison d'éléments à liaison de matière et d'éléments à complémentarité de forme.

16. Ensemble formant pare-chocs selon l'une quelconque des revendications précédentes, **caractérisé en ce que** le rapport de la surface de section transversale verticale moyenne du corps de coque (15) dans la zone de base (25) par rapport à la surface de section transversale verticale moyenne du caisson anticollision (3) est dimensionné entre 2:1 et 4:1, en particulier à 3:1, respectivement +/- 25 %.

17. Ensemble formant pare-chocs selon l'une quelconque des revendications précédentes, **caractérisé en ce que** le rapport de la hauteur (h1) mesurée dans l'axe z du corps de coque (15) dans la zone de base (25) entre sa paroi latérale supérieure (23') et sa paroi latérale inférieure (23") et la hauteur (h2) mesurée dans l'axe z de la traverse (2) est dimensionné entre 2:1 et 4:1, respectivement +/- 25 %.
